## Europäisches Patentamt

## European Patent Office

## Office européen des brevets

(19)

(11) Veröffentlichungsnummer: **0 116 284**
**A2**

# (12) EUROPÄISCHE PATENTANMELDUNG

(21) Anmeldenummer: **84100186.0**

(22) Anmeldetag: **10.01.84**

(51) Int. Cl.³: **G 06 K 9/78**

(30) Priorität: **18.01.83 DE 3301495**
**18.01.83 DE 3301494**

(43) Veröffentlichungstag der Anmeldung:
**22.08.84 Patentblatt 84/34**

(84) Benannte Vertragsstaaten:
**AT BE CH DE FR GB LI NL SE**

(71) Anmelder: **Pietzsch, Ludwig, Dr.-Ing.**
**Im Rosengärtle 14**
**D-7500 Karlsruhe 41(DE)**

(72) Erfinder: **Pietzsch, Ludwig, Dr.-Ing.**
**Im Rosengärtle 14**
**D-7500 Karlsruhe 41(DE)**

(72) Erfinder: **Kauer, Harald, Dr.-Ing.**
**Schauinslandstrasse 6**
**D-7505 Ettlingen 6(DE)**

(72) Erfinder: **Senger, Detlef, Dr.-Ing.**
**Schlosserweg 8**
**D-7505 Ettlingen 5(DE)**

(72) Erfinder: **Rössler, Jürgen, Dr.-Ing.**
**Wutachweg 5**
**D-7505 Ettlingen 5(DE)**

(74) Vertreter: **Liesegang, Roland, Dr.-Ing.**
**Sckellstrasse 1**
**D-8000 München 80(DE)**

(54) Verfahren und Vorrichtung zum Erkennen von Flächenmustern an unterschiedlichen Objekten.

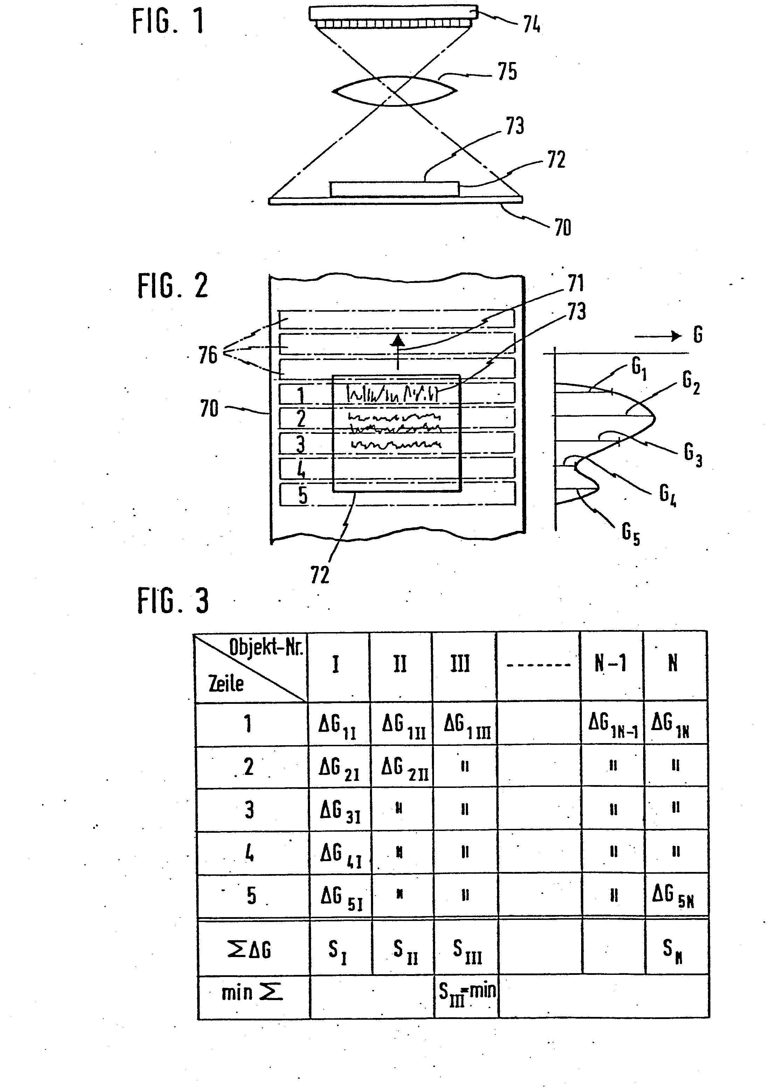

(57) Es werden ein Verfahren und eine Vorrichtung zum Erkennen von Flächenmustern (73) an unterschiedlichen Objekten (72), wie Zeitschriften, mittels optischer Sensoren (74) vorgeschlagen, wobei die Objekte (72) durch unterschiedliche Ist-Flächenmuster, wie Zeitschriftentitel, gekennzeichnet sind. Erfindungsgemäß wird ein charakteristischer optischer Wert des Ist-Flächenmusters in mindestens einer Vorzugsrichtung des Objektes (72) zeilenweise aufgenommen und mit entsprechenden gespeicherten Werten sämtlicher vorher aufgenommener Soll-Flächenmuster für alle Objekte Zeile für Zeile verglichen. Das Vergleichs ergebnis wird aufsummiert. Dasjenige Objekt (72) wird als richtig erkannt, das im Vergleich mit den gespeicherten Werten die geringste Abweichung der gebildeten Summe von dem entsprechenden Wert des betreffenden Musterobjektes aufweist (Figur 1).

FIG. 1

**0116284**

Dr.-Ing. Roland Liesegang

Patentanwalt
European Patent Attorney

Sckellstrasse 1
D-8000 München 80
Telefon (089) 4 48 24 96

Telex 5 214 382 pali d
Telekopierer (089) 272 04 80, 272 04 81
Telegramme palemus münchen

Postscheck München 394 18-802
Hypobank München 6 400 194 333
Reuschelbank München 2 603 007

DR.-ING. LUDWIG PIETZSCH

Karlsruhe, Bundesrepublik Deutschland

EU 005 55

Verfahren und Vorrichtung zum Erkennen von Flächenmustern an unterschiedlichen Objekten

Die Erfindung betrifft ein Verfahren zum Erkennen von Flächenmustern von unterschiedlichen Objekten , wie unterschiedlichen Zeitschriften oder anderen Druckerzeugnissen mittels optischer Sensoren, wobei Ist-Flächenmuster aufgenommen und jeweils mit einem gespeicherten Soll-Flächenmuster in Echtzeit verglichen werden.

Beim Kommissionieren und Remissionieren von Zeitschriften, Zeitungen oder ähnlichen Druckerzeugnissen ist es wünschenswert, schnell und einfach die beispielsweise auf einem Förderband angeförderten Zeitschriften oder dgl. je nach ihrem Titel zu erkennen. Insbesondere beim Remissionieren werden in wahlloser Folge hintereinander unterschiedliche Zeitschriften angeliefert, die von Hand in Fächer von Regalen zu Rückleitung an die jeweiligen Verlage sortiert werden müssen.

Es ist bereits ein Erkennungsverfahren vorgeschlagen worden (deutsche Patentanmeldung P 32 32 179.1), bei welchem Grauwertinformationen eines Flächenmusters auf einem Objekt zeilenweise ermittelt werden. Das richtige Objekt läßt sich dabei nur mit einem großen Aufwand an Rechnung, d.h. Software, identifizieren.

Der Erfindung liegt die Aufgabe zugrunde, ein Verfahren und eine Vorrichtung der eingangs beschriebenen Art so auszubilden, daß der Software-Aufwand ganz erheblich reduziert und trotz dieser Vereinfachung ein schneller Vergleich ermöglicht ist.

Zur Lösung dieser Aufgabe ist bei einem Verfahren gemäß der Erfindung vorgesehen, daß ein charakteristischer optischer Wert des Ist-Flächenmusters in mindestens einer Vorzugsrichtung des Objektes zeilenweise aufgenommen und mit entsprechenden gespeicherten Werten sämtlicher vorher aufgenommener Soll-Flächenmuster Zeile für Zeile verglichen wird und daß ein Erkennen bei demjenigen Flächenmuster angezeigt wird, welches insgesamt bezüglich aller zeilenweise aufgenommenen Vergleiche die geringste Abweichung unterhalb einer vorbestimmten Schwelle zwischen dem Ist- und allen Soll-Flächenmustern aufweist.

Bei der Erfindung ist der Software-Aufwand erheblich reduziert, indem die charakteristischen gespeicherten Werte praktisch aller Objekte sequentiell oder parallel mit dem jeweils aufgenommenen optischen Wert verglichen werden, für jedes Objekt die Summe aus den Einzelvergleichsergebnissen gebildet und diejenige Summe ausgewählt wird, welche insgesamt die geringste Abweichung zwischen den Ist- und dem Soll-Flächenmustern aufweist.

Vorteilhaft wird zum Vergleichen jeweils die Differenz zwischen den charakteristischen gemessenen und gespeicherten optischen Werten gebildet, die Ergebnisse sämtlicher Differenzen werden je Objekt aufsummiert, und es wird jeweils die minimale Summe als erkanntes Objekt ausgewählt.

Es ist vorteilhaft, wenn als charakteristischer optischer Wert für jede erfaßte Zeile der mittlere Grauwert ausgewählt wird, welcher durch Integration der Grauwertamplitude ermittelt wird (deutsche Patentanmeldung P 32 32 279.1).

Bei dem bekannten Erkennungsverfahren zur Ermittlung von Grauwertinformationen läßt sich eine eventuelle Schräglage der Objekte auf einem Förderband, welches an den Sensoren vorbeigeführt wird, nur durch aufwendige Rechenvorgänge in einem Rechner ausgleichen. Ein Schräglagenausgleich der Objekte ist deshalb nötig, weil die Sensoren gewöhnlich quer zur Bewegungsrichtung das Ist-Flächenmuster zeilenartig erfassen und eine Verfälschung des Vergleichs mit dem in zur Bewegungsrichtung paralleler Lage erfaßten gespeicherten Flächenmuster unvermeidlich wäre, wenn nicht die Schräg- oder Winkellage des Objektes bezüglich der Bewegungsrichtung berücksichtigt werden würde.

Mit der Erfindung soll auch ein Verfahren der eingangs genannten Art geschaffen werden, bei welchem unter Vermeidung aufwendiger Rechenvorgänge schnell ein Ist-Flächenmuster auf einem Objekt erkennbar ist, wobei eine eventuelle Winkellage der Objekte zur Bewegungsrichtung in einfacher Weise berücksichtigt wird.

Hierzu ist gemäß einer weiteren Ausgestaltung des Verfahrens nach der Erfindung vorgesehen, daß eine eventuelle Winkellage der Objekte bezüglich der Bewegungsrichtung erfaßt und durch eine dem gemessenen Winkel entsprechende Drehung derart ausgeglichen wird, daß die Objekte ausschließlich in zur Sensorausrichtung gleichgerichteter Lage erkannt werden.

Vorteilhafte Ausgestaltungen dieses Verfahrens, das auch ohne die Verfahrensmerkmale der Ansprüche 1 bis 3 erfinderische Bedeutung hat und sinnvolle Anwendung finden kann, sind in den Unteransprüchen 5 bis 7 unter Schutz gestellt.

Eine Vorrichtung zum Durchführen des beschriebenen Verfahrens kennzeichnet sich erfindungsgemäß durch mindestens einen optoelektronischen Zeilensensor für die zeilenweise Grauwertaufnahme eines Flächenmusters auf einem Objekt, einen Speicher, in dem die Grauwerte sämtlicher vorkommender Objekte zeilenweise gespeichert sind, einen Vergleicher zum Vergleichen der gespeicherten Grauwerte sämtlicher Objekte mit dem durch den Zeilensensor erfaßten Grauwert Zeile für Zeile mittels Differenzbildung , einen Summierbaustein zum Aufsummieren sämtlicher, je Objekt gewonnener Differenzen und einen Baustein zur Ermittlung der kleinsten Summe aller vom Summierbaustein übermittelten Summensignale.

Zweckmäßig kann hierbei eine Sensoranordnung mit mehreren Zeilensensoren in einer solchen Anzahl vorgesehen sein, daß die größte vorkommende Objektlänge von der Sensoranordnung überstrichen wird. Dies ermöglicht eine zeitgleiche Gesamtaufnahme jedes vorkommenden Objektes.

Einfacher ist eine Ausführung, bei welcher ein einziger Zeilensensor vorgesehen ist, der getaktet wird und relativ zu dem das Objekt bewegt wird. Hierbei erfolgt die Aufnahme eines Objektes zeitlich nacheinander Zeile für Zeile. Abgesehen von diesem Unterschied in der Sensorausbildung unterscheiden sich die nachgeschalteten Bausteine der Vorrichtung nicht.

Die Erfindung betrifft auch eine Vorrichtung, mit der sich eine eventuelle Winkellage der Objekte zur Bewegungsrichtung in einfacher Weise berücksichtigen läßt.

Eine solche Vorrichtung ist erfindungsgemäß dadurch gekennzeichnet, daß in Bewegungsrichtung vor den Sensoren zum Erkennen des Ist-Flächenmusters mindestens zwei Lageerkennungs-Sensoren so bezüglich der Bewegungsrichtung angeordnet sind, daß aus dem Zeitintervall, das zwischen dem Überfahren der beiden Lageerkennungs-Sensoren durch eine Objektbezugskante verstreicht, auf den Winkel geschlossen werden kann, welchen die Objektbezugskante mit der Bewegungsrichtung bzw. einer Orthogonalen dazu einschließt.

Bei einer vorteilhaften Ausgestaltung dieser Vorrichtung ist vorgesehen, daß die beiden Lageerkennungs-Sensoren mit Abstand quer zur Bewegungsrichtung angeordnet sind.

Bei einer praktischen Ausführung sind die Objekte auf einen bewegten Förderer, wie ein Förderband oder einen Drehteller, mit dem Flächenmuster zu den darüber stillstehend angeordneten Sensoren zur Erkennung des Ist-Flächenmusters hinweisend aufgelegt.

Zum Ausgleich einer eventuellen Winkellage der Objekte ist vorteilhaft eine Objekt-, Sensor- oder Bilddrehvorrichtung vorgesehen, welche zu einer der Winkellage des Objektes entsprechenden Rückdrehung ausgebildet ist, derart, daß Parallelität zwischen der Objektlage und der Bewegungsrichtung bzw. zwischen der Objektbezugskante und der Ausrichtung der vorzugsweise zeilenförmig angeordneten Sensoren hergestellt wird.

Die Erfindung ist im folgenden anhand schematischer Zeichnungen an einem Ausführungsbeispiel mit weiteren Einzelheiten näher erläutert. Es zeigen:

Fig. 1    eine Ansicht einer Vorrichtung zum Erkennen von Objekten gemäß der Erfindung;

Fig. 2    eine Draufsicht der Vorrichtung nach Fig. 1, wobei rechts neben dieser Draufsicht ein Diagramm mit für die einzelnen Zeilenfelder charakteristischen Grauwerten über der Objektlänge dargestellt ist;

Fig. 3        eine Matrix, anhand deren die Auswertung erläutert ist;
Fig. 4        eine Darstellung einer Vorrichtung nach der
              Erfindung in Form eines Fluß-Diagrammes,
Fig. 5        eine Abwandlung der Vorrichtung nach Fig. 4,
Fig. 6        eine Ansicht einer Vorrichtung zum Erkennen
              von Objekten mit Ausgleich der Winkellage
              gemäß der Erfindung;
Fig. 7        eine Draufsicht auf die Vorrichtung gemäß

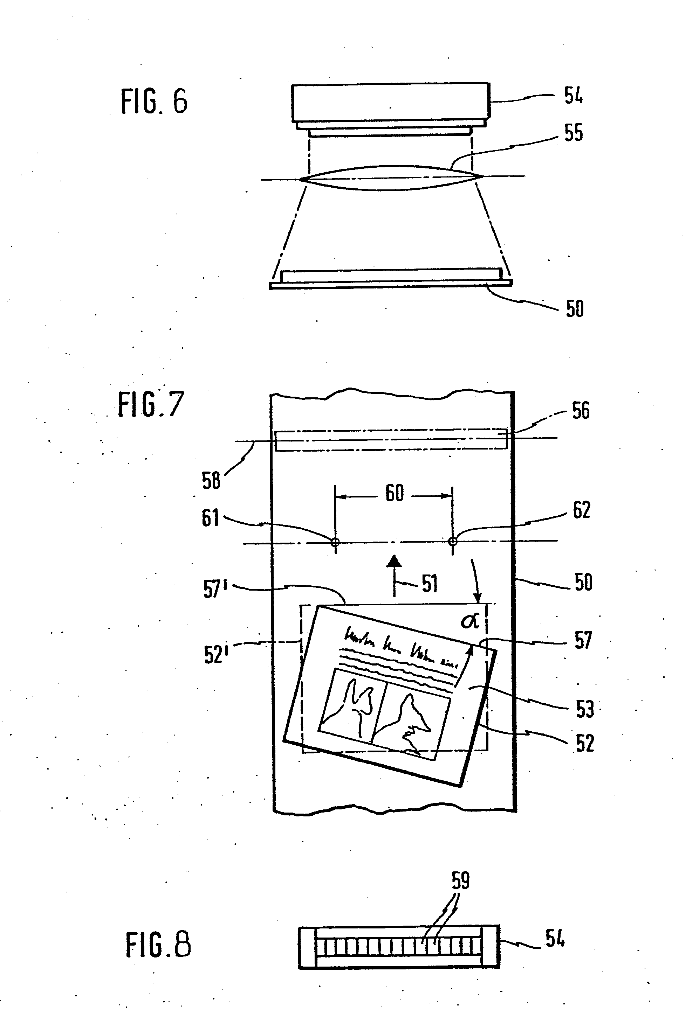

              Fig. 6 und
Fig. 8        eine Unteransicht einer Sensorzeile der Vorrichtung gemäß den Fig. 6 und 7.

In Fig. 1 und 2 ist mit der Bezugszahl 70 ein Förderband bezeichnet, welches in der mit dem Pfeil 71 in Fig. 2 bezeichneten Richtung beweglich ist und Objekte in Form unterschiedlicher Zeitschriften trägt. Eines dieser Objekte ist in den Fig. 1 und 2 gezeigt und mit der Bezugszahl 72 bezeichnet. Zur Erkennung des in Fig. 2 angedeuteten Titels 73 der Zeitschrift ist gemäß Fig. 1 ein einzeiliger Sensor 74 oder eine Sensoranordnung mit mehreren, die größte Zeitschriften- bzw. Objektlänge überdeckenden Sensorzeilen 74 vorgesehen, die mit ihren Einzelsensoren über ein Linsensystem 75 auf das Förderband dessen Gesamtbreite überdeckend so strahlt, daß jeweils ein Feld 76 (s. Fig. 2) abgedeckt wird. Ist ein mehrzeiliger Sensor vorgesehen, so hat er soviele Zeilen, daß die größte in Richtung parallel zum Förderband 70 gemessene Objektlänge von der Sensoranordnung überdeckt ist. In Fig. 2 und 3 sind jeweils nur fünf Sensorzeilen angedeutet. Bei praktischen Ausführungen können beispielsweise 32 oder mehr Sensorzeilen vorgesehen sein.

Während mit einer Sensoranordnung eine zeitgleiche Momentaufnahme des gesamten Objektes möglich ist, wird bei Vorsehen einer einzigen Sensorzeile 74 eine Taktung vorgenommen, so daß sich ebenfalls eine zeilenweise Aufzeichnung des Objektes ergibt, hier jedoch sequentiell,d.h. in zeitlicher Reihenfolge. Hierzu ist eine Relativbewegung zwischen der Sensorzeile 74 und dem Förderband 70 unabdingbar.

Gemäß dem Diagramm in der rechten Hälfte der Fig. 2 werden für jeden Zeilenstreifen einzelne Grauwerte $G_1$, $G_2$... aufgenommen, und zwar ebensoviele Grauwerte,wie Zeilenstreifen vorhanden sind (bei dem gezeigten Ausführungsbeispiel fünf Zeilenstreifen). Daraus ergibt sich die in dem Diagramm gezeigte Grauwertverteilung G für das erfaßte Objekt.

Entsprechende Grauwerte G sind für sämtliche vorkommenden Objekte bzw. Zeitschriften, beispielsweise insgesamt 128 unterschiedliche Zeitschriften, gespeichert.

Zur Veranschaulichung des Erkennungsvorgangs sei nun auf Fig. 3 verwiesen. Die vorkommenden Objekte sind dort mit römischen Ziffern I,II,III,..bis N bezeichnet. Wie in Fig.2 sind die Zeilenstreifen mit 1 bis 5 bezeichnet. Für jedes Objekt sind die einzelnen Grauwerte $G_1$ bis $G_5$ bzw. $G_n$ (n = Zeilenanzahl) im Teach-in-Verfahren anhand von Objektmustern gespeichert. Sämtliche zeilenweise erfaßten Ist-Grauwerte $G_1$ bis $G_n$ werden nun durch Differenzbildung mit den gespeicherten entsprechenden Grauwerten sämtlicher Objekte verglichen, d.h. es werden die Ausdrücke $\Delta G_{1II}$, $\Delta G_{1II}$ usw. gebildet.

Die Grauwertdifferenzen sämtlicher Zeilen werden für jedes Objekt zu den Summen $S_I$, $S_{II}$ usw. bis $S_N$ aufsummiert. Aus diesen Summenausdrücken wird diejenige Summe herausgesucht, welche am kleinsten und kleiner als ein vorgegebener Schwellenwert ist. Das so gefundene Objekt wird dann als erkannt behandelt.

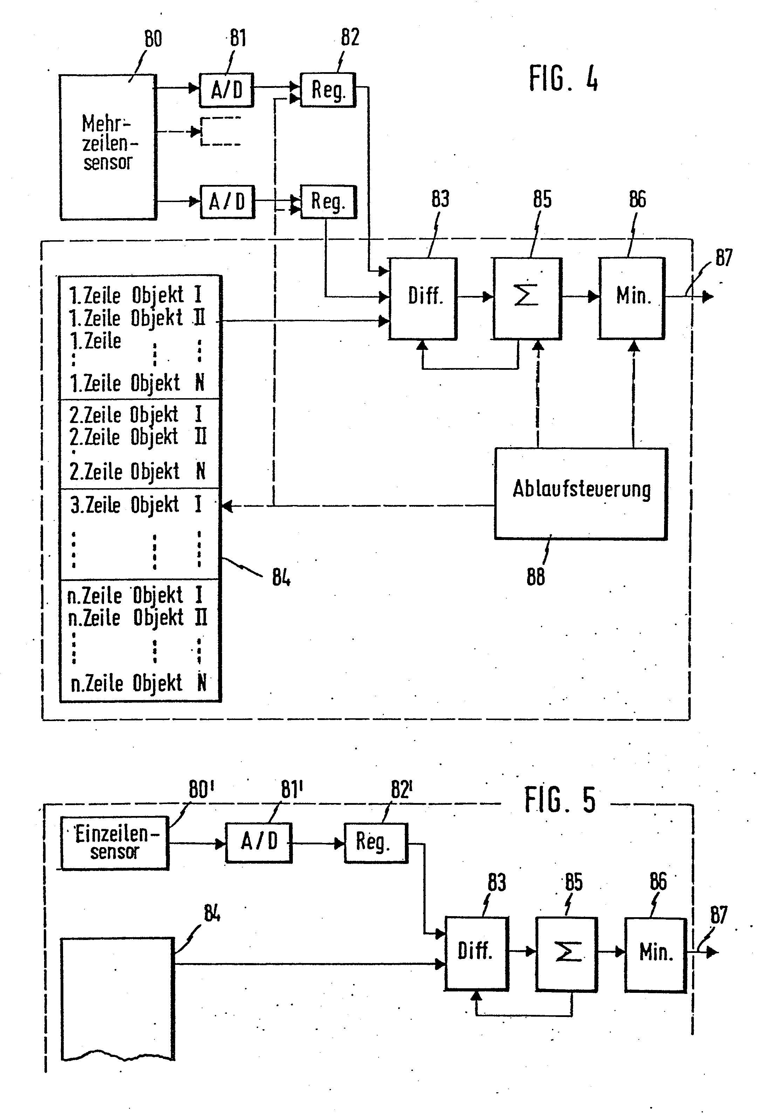

Fig. 4 zeigt den Aufbau einer Vorrichtung zum Durchführen des anhand der Fig. 2 und 3 erläuterten Erkennungsverfahrens.

Ein Mehrzeilensensor 80 gibt über A/D-Wandler 81, deren Anzahl der Sensorzeilenanzahl entspricht, an Register 82 das Ist-Flächenmuster des Objekts 72 repräsentierende Signale ab. Diese Register wirken auf einen Differenzbildungsbaustein 83, der von einem Speicher 84 für Grauwerte beaufschlagt ist. Die Art der Speicherung, nämlich zeilenweise Speicherung nacheinander für eine Zeile sämtlicher Objekte , ist in Fig. 4 angedeutet. Die Differenz wird im Baustein 83 dadurch gebildet, daß durch das Register Zeile für Zeile die gespeicherten Werte durchgeschoben und mit den erfaßten Ist-Grauwerten verglichen werden. Die Ausgangssignale des Differenzbildungsbausteines werden einem Summenbildungsbaustein 85 zugeführt, der die Summe aus sämtlichen, zu einem Objekt gehörenden Differenzen bildet. Die vom Baustein 85 kommenden Summensignale werden einem Baustein 86 zur Minimumermittlung zugeführt, welche nach Feststellen der minimalen Summe das erkannte Objekt bei 87 ausgibt. Eine Ablaufsteuerung 88, insbesondere Adreßfortschaltung für die Speicherbausteine, wirkt gemäß den gestrichelt eingezeichneten Pfeilen auf die einzelnen Bausteine in üblicher Weise ein. Die gesamte Baugruppe ist auf einer Karte beispielsweise im Format 160 x 100 mm untergebracht. Acht solcher Karten reichen für 1024 Objekte aus.

Die Abwandlung nach Fig. 5 unterscheidet sich einzig und allein dadurch, daß ein Einzeilensensor 80' vorgesehen ist, der über einen einzigen A/D-Wandler 88' auf ein Register 82' wirkt. Im übrigen sind die gleichen Bausteine wie in Fig. 4 verwendet.

In den Fig. 6 und 7 ist mit der Bezugszahl 50 ein Förderband bezeichnet, welches in Richtung 51 beweglich ist und Objekte 52 in Form von Zeitschriften, Zeitungen oder anderen Druckerzeugnissen trägt. Diese Objekte tragen auf ihrer vom Förderband 50 wegweisenden Fläche ein Flächenmuster 53. Oberhalb des Förderbandes 50 ist eine Sensorzeile 54 angeordnet, deren Sensoren über eine optische Linsenanordnung 55 in betätigtem Zustand die Breite des Förderbandes überdecken und ein Feld 56 erfassen (Fig. 7). Um das Flächenmuster 53, insbesondere einen Zeitschriftentitel, korrekt erfassen zu können, muß Parallelität der Objektbezugskante 57 und der Ausrichtung 58 der Einzelsensoren 59 der Sensorzeile 54 erzielt werden.

Hierzu sind vor der Sensorzeile in einem Abstand 60 quer zur Bewegungsrichtung 51 und symmetrisch zwei Einzelsensoren 61, 62 angeordnet.

Die Sensoren 61, 62 sind ebenso wie die Sensorzeile 54 mit den Einzelsensoren 59 relativ zum bewegten Förderband 50 stillstehend angeordnet, wobei die Einzelsensoren 61, 62 ebenfalls oberhalb des Förderbandes angeordnet sein können. Wenn dieses durchsichtig ausgebildet ist, könnten die Sensoren 61, 62 auch unterhalb des Förderbandes 50 angeordnet sein.

Wenn das Förderband 50 in seiner Bewegung das Objekt 52 in Bewegungsrichtung 51 transportiert, wird zuerst der

Sensor 61 von der Bezugskante 57 überstrichen. In einem von der Geschwindigkeit des Förderbandes 50 abhängigen Zeitintervall danach wird auch der Sensor 62 von der Objektbezugskante 57 überfahren. Aus dem erfaßten Zeitintervall läßt sich auf die Winkellage der Objektbezugskante 57 und damit des Objektes 52 bezüglich der Ausrichtung 58 der Sensorzeile 54 bzw. der Bewegungsrichtung 51 schließen.

Mit einer üblichen und deshalb hier nicht beschriebenen Vorrichtung zum Drehen entweder des Objektes 52, der Sensorzeile 54 oder des damit erfaßten Bildes zur virtuellen Objektdrehung läßt sich Parallelität zwischen der Ausrichtung 58 der Sensorzeile und Bezugskante 57 herstellen. In Fig. 7 ist dies dadurch angedeutet, daß das Objekt 52 gestrichelt in der gedrehten Lage 52' gezeigt ist, wobei die Bezugskante die Lage 57' einnimmt. Ebenso hätte auch das Sensorfeld 56 in einer zur Bezugskante 57 parallelen Lage schräggestellt gezeichnet werden können.

Eine weitere Möglichkeit des Ausgleichs der Schräglage besteht darin, daß entweder das Objekt oder der Sensor oder das erfaßte Bild kontinuierlich gedreht und die Sensoren 59 der Sensorzeile 54 nur dann betätigt werden, wenn momentan Parallelität erreicht ist.

Dr.-Ing. Roland Liesegang

0116234

Patentanwalt
European Patent Attorney

Sckellstrasse 1
D-8000 München 80
Telefon (089) 4 48 24 96

Telex 5214 382 pali d
Telekopierer (089) 272 04 80, 272 04 81
Telegramme patemus münchen

Postscheck München 394 18-802
Hypobank München 6 400 194 333
Reuschelbank München 2 603 007

Verfahren und Vorrichtung zum Erkennen von Flächenmustern
an unterschiedlichen Objekten
_____

Ansprüche

1. Verfahren zum Erkennen von Flächenmustern an unterschiedlichen Objekten, wie unterschiedlichen Zeitschriften oder anderen Druckerzeugnissen mittels
optischer Sensoren, wobei Ist-Flächenmuster aufgenommen und jeweils mit einem gespeicherten Soll-
Flächenmuster in Echtzeit verglichen werden, dadurch
g e k e n n z e i c h n e t, daß ein charakteristischer
optischer Wert des Ist-Flächenmusters in mindestens
einer Vorzugsrichtung des Objektes zeilenweise aufgenommen und mit entsprechenden gespeicherten Werten sämtlicher vorher aufgenommener Soll-Flächenmuster Zeile für Zeile verglichen wird
und daß ein Erkennen bei demjenigen Flächenmuster angezeigt wird, welches insgesamt bezüglich aller zeilenweise vorgenommenen Vergleiche die geringste Abweichung
unterhalb einer vorbestimmten Schwelle zwischen dem Ist-
und allen Soll-Flächenmustern aufweist.

2. Verfahren nach Anspruch 1, dadurch g e k e n n -
z e i c h n e t, daß zum Vergleichen jeweils die
Differenz zwischen den charakteristischen gemessenen
und gespeicherten optischen Werten gebildet wird, die
Ergebnisse sämtlicher Vergleiche je Objekt aufsummiert werden und jeweils die minimale Summe als erkanntes Objekt ausgewählt wird.

3. Verfahren nach Anspruch 1 oder 2, dadurch g e k e n n - z e i c h n e t, daß als charakteristischer optischer Wert für jede erfaßte Zeile der mittlere Grauwert durch Integration der Grauwertamplitude ermittelt wird.

4. Verfahren insbesondere nach einem der Ansprüche 1 bis 3, dadurch g e k e n n z e i c h n e t, daß eine eventuelle Winkellage der Objekte bezüglich der Bewegungsrichtung erfaßt und durch eine dem gemessenen Winkel entsprechende Drehung der Sensoren, des Objektes oder des mittels der Sensoren aufgenommenen Objektbildes derart ausgeglichen wird, daß die Objekte ausschließlich in zur Sensorausrichtung ausgerichteter Lage erkannt werden.

5. Verfahren nach Anspruch 4, dadurch g e k e n n - z e i c h n e t, daß die Winkellage der Objekte durch Messen des Winkels einer Objekt-Bezugskante bezüglich einer Senkrechten zur Bewegungsrichtung erfaßt wird.

6. Verfahren nach Anspruch 4 oder 5, dadurch g e k e n n - z e i c h n e t, daß die Sensoren oder das Objekt kontinuierlich gedreht und das Ist-Flächenmuster zu dem Zeitpunkt aufgenommen werden, in welchem Parallelität zwischen Objektlage und Bewegungsrichtung vorliegt.

7. Verfahren nach einem der Ansprüche 4 bis 6, bei welchem zur Aufnahme des Ist-Flächenmusters eine quer zur Bewegungsrichtung angeordnete Sensorzeile getaktet wird, dadurch g e k e n n z e i c h n e t, daß die Taktzeit an die jeweils gemessene Winkellage der Objekte angepaßt wird.

- 13 -

0116284

8. Vorrichtung zum Durchführen des Verfahrens nach einem der Ansprüche 1 bis 7, g e k e n n z e i c h n e t durch

   a) mindestens einen optoelektronischen Zeilensensor (80;80') für die zeilenweise Grauwertaufnahme eines Flächenmusters auf einem Objekt,

   b) einen Speicher (84), in dem die Grauwerte sämtlicher vorkommender Objekte zeilenweise gespeichert sind,

   c) einen Vergleicher (83) zum Vergleichen der gespeicherten Grauwerte sämtlicher Objekte mit dem durch den Zeilensensor (80;80') erfaßten Grauwert Zeile für Zeile mittels Differenzbildung,

   d) einen Summierbaustein (85) zum Aufsummieren sämtlicher, je Objekt gewonnener Differenzen und

   e) einen Baustein (86) zur Ermittlung der kleinsten Summe aller vom Summierbaustein übermittelten Summensignale.

9. Vorrichtung nach Anspruch 8, dadurch g e k e n n - z e i c h n e t, daß eine Sensoranordnung mit mehreren Zeilensensoren (80) in einer solchen Anzahl vorgesehen sind, daß die größte vorkommende Objektlänge von der Sensoranordnung überstrichen wird.

10. Vorrichtung nach Anspruch 8, dadurch g e k e n n - z e i c h n e t, daß ein einziger Zeilensensor (80') vorgesehen ist, der getaktet wird und relativ zu dem das Objekt (72) bewegt wird.

11. Vorrichtung zum Durchführen des Verfahrens nach einem der Ansprüche 4 bis 7, dadurch g e k e n n z e i c h - n e t, daß in Bewegungsrichtung vor den Sensoren (54) zum Erkennen des Ist-Flächenmusters (53) mindestens zwei Lageerkennungs-Sensoren (61,62) so bezüglich der Bewegungsrichtung (51) angeordnet sind, daß aus dem

- 14 -

0116284

Zeitintervall, das zwischen dem Überfahren der beiden Lageerkennungs-Sensoren (61,62) durch eine Objektbezugskante (57) verstreicht, auf den Winkel ($\alpha$) geschlossen werden kann, welchen die Objektbezugskante (57) mit der Bewegungsrichtung (51) bzw. einer Orthogonalen (58) dazu einschließt.

12. Vorrichtung nach Anspruch 11, dadurch g e k e n n - z e i c h n e t, daß zwei Lageerkennungs-Sensoren (61,62) mit Abstand (60) quer zur Bewegungsrichtung (51) angeordnet sind.

13. Vorrichtung nach Anspruch 11 oder 12, dadurch g e - k e n n z e i c h n e t, daß eine Objekt-, Sensor- oder Bilddrehvorrichtung vorgesehen ist, welche zu einer der Winkellage des Objektes entsprechenden Rückdrehung ausgebildet ist.

14. Vorrichtung nach einem der Ansprüche 8 bis 11, dadurch g e k e n n z e i c h n e t, daß eine Vorrichtung zum kontinuierlichen Drehen des Objektes oder der Sensoren sowie eine Zeitsteuervorrichtung zum Betätigen der Sensoren nur bei momentaner Parallelität zwischen Objektlage und Sensoren vorgesehen sind.

**FIG. 1**

**FIG. 2**

**FIG. 3**

| Objekt-Nr. / Zeile | I | II | III | ------- | N−1 | N |
|---|---|---|---|---|---|---|
| 1 | $\Delta G_{1I}$ | $\Delta G_{1II}$ | $\Delta G_{1III}$ | | $\Delta G_{1N-1}$ | $\Delta G_{1N}$ |
| 2 | $\Delta G_{2I}$ | $\Delta G_{2II}$ | " | | " | " |
| 3 | $\Delta G_{3I}$ | " | " | | " | " |
| 4 | $\Delta G_{4I}$ | " | " | | " | " |
| 5 | $\Delta G_{5I}$ | " | " | | " | $\Delta G_{5N}$ |
| $\sum \Delta G$ | $S_I$ | $S_{II}$ | $S_{III}$ | | | $S_N$ |
| min $\sum$ | | | $S_{III}=min$ | | | |

## FIG. 4

Mehr-zeilen-sensor — 80

A/D — 81

Reg. — 82

Diff. — 83

Σ — 85

Min. — 86

— 87

1.Zeile Objekt I
1.Zeile Objekt II
1.Zeile      ⋮      ⋮
1.Zeile Objekt N

2.Zeile Objekt I
2.Zeile Objekt II
2.Zeile Objekt N

3.Zeile Objekt I

⋮      ⋮      ⋮

n.Zeile Objekt I
n.Zeile Objekt II
⋮      ⋮      ⋮
n.Zeile Objekt N

— 84

Ablaufsteuerung — 88

## FIG. 5

Einzeilen-sensor — 80'

A/D — 81'

Reg. — 82'

84

Diff. — 83

Σ — 85

Min. — 86

— 87

FIG. 6

54

55

50

FIG.7

56

58

60

61

62

51

50

57'

52'

α

57

53

52

59

FIG.8

54